# EUROPEAN PATENT APPLICATION

(11) **EP 2 541 259 A1**
(43) Date of publication of application: **02.01.2013**
(21) Application number: 12160240.3
(22) Date of filing: 20.03.2012
(51) Int. Cl.: G01P 15/135, B60R 21/013, H01H 35/14

(54) **Sensors for detecting rapid deceleration/acceleration events**

(30) Priority: 27.06.2011 US 201113170079
(71) Applicant: AmSafe, Inc., Phoenix, AZ 85043 (US)
(72) Inventor: Baca, Andre, Laveen, AZ Arizona 85339 (US)
(74) Representative: Grünecker, Kinkeldey, Stockmair & Schwanhäusser

(57) **Abstract**

Sensors for detecting rapid deceleration/acceleration events are disclosed herein. A sensor configured in accordance with one embodiment of the disclosure includes a magnetically operable device proximate to a magnet. The sensor also includes a biasing member operably coupled to a magnetic shield. The biasing member controls the movement of the magnetic shield between a first position that shields the magnetically operable device from the magnet, and a second position that exposes the magnetically operable device to the magnet. In a deceleration/acceleration event, the magnetic shield overcomes the biasing member and moves from the first position to the second position, thereby causing the magnetically operable device to be exposed to the magnet.

## Description

### TECHNICAL FIELD

The following disclosure relates generally to motion sensors, and more specifically to sensors for detecting a rapid deceleration/acceleration event in a vehicle for initiation of airbags and/or other restraint systems.

### BACKGROUND

Modern aircraft, automobiles, and other vehicles generally employ personal restraint systems to protect occupants from a rapid deceleration/acceleration event, such as a crash. These systems often include seat belts utilizing lap and/or shoulder portions, and may also include inflatable airbags to further protect occupants. Many of these personal restraint systems utilize sensors and electronic circuitry to facilitate or enhance their protective features. Seat belts in automobiles, for example, often utilize a latch sensor to detect whether the belt is fastened and initiate an audible signal to remind an occupant to fasten the belt. Additionally, some personal restraint systems utilize crash sensors to detect a collision and provide protective responses.

Various types of sensors are used to detect a crash or other rapid deceleration/acceleration event and initiate inflation of an airbag, lock or pretension a seat belt system, and/or initiate other responses. One type of sensor for use in airbag initiation utilizes a reed switch in cooperation with a spring-biased magnet. In general, a crash event causes the magnet to move into a position where it actuates (e.g., closes) the reed switch, thereby activating a circuit that deploys the airbag. Although these sensors can provide reliable initiation in a crash event, they may also be susceptible to external magnetic influence. For example, if a magnetic field is induced by a separate magnet or electromagnetic device of sufficient strength, the reed switch can be inadvertently actuated.

### BRIEF DESCRIPTION OF THE DRAWINGS

FIG. 1 is an isometric view of an airbag system configured in accordance with an embodiment of the disclosure.

FIG. 2 is a partially exploded cross-sectional isometric view of a sensor configured in accordance with an embodiment of the disclosure.

FIG. 3 is a cutaway view of a reed switch configured in accordance with an embodiment of the disclosure.

FIG. 4 is an isometric view of a Hall effect sensor configured in accordance with an embodiment of the disclosure.

FIG. 5 is a cross-sectional isometric view of a portion of a sensor configured in accordance with another embodiment of the disclosure.

### DETAILED DESCRIPTION

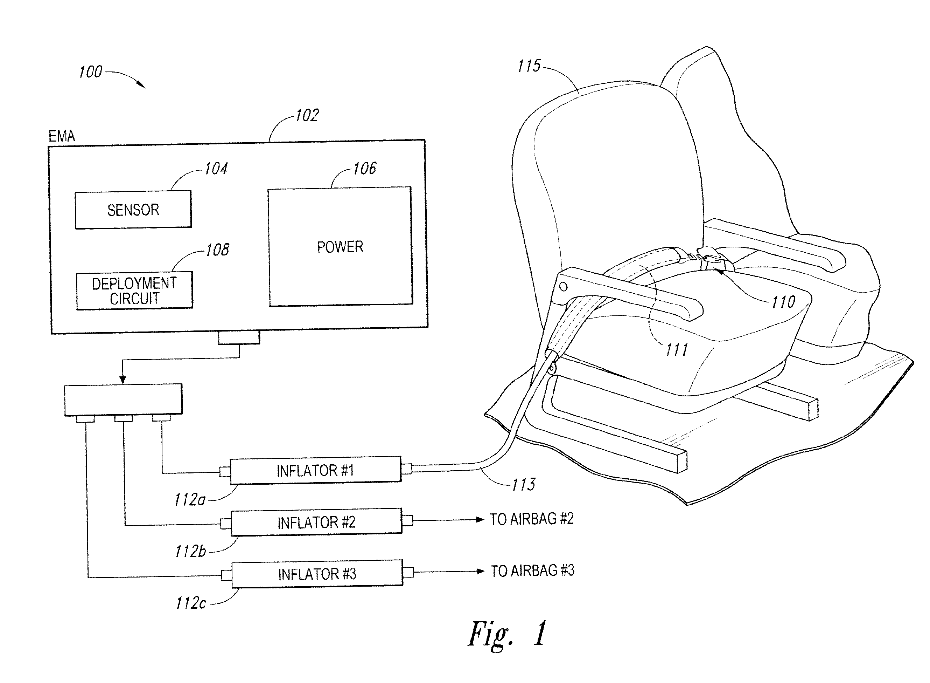

The following disclosure describes various embodiments of crash sensors for use with airbags and other restraint systems, and associated methods of manufacture and use. Certain details are set forth in the following description and Figures 1-5 to provide a thorough understanding of various embodiments of the disclosure. Other details describing well-known structures and systems often associated with crash sensors, reed switches, Hall effect sensors, and airbag systems, however, are not set forth below to avoid unnecessarily obscuring the description of the various embodiments of the disclosure.

Many of the details and features shown in the Figures are merely illustrative of particular embodiments of the disclosure. Accordingly, other embodiments can have other details and features without departing from the spirit and scope of the present disclosure. In addition, those of ordinary skill in the art will understand that further embodiments can be practiced without several of the details described below. Furthermore, various embodiments of the disclosure can include structures other than those illustrated in the Figures and are expressly not limited to the structures shown in the Figures. Moreover, the various elements and features illustrated in the Figures may not be drawn to scale.

In the Figures, identical reference numbers identify identical, or at least generally similar, elements. To facilitate the discussion of any particular element, the most significant digit or digits of any reference number refer to the Figure in which that element is first introduced. Element 102, for example, is first introduced and discussed with reference to FIG. 1.

Figure 1 is an isometric view of an airbag system 100 configured in accordance with an embodiment of the disclosure. The airbag system 100 includes an electronics module assembly (EMA) 102 which is operably connected to one or more inflators 112 (identified individually as a first inflator 112a, a second inflator 112b and a third inflator 112c). The first inflator 112a is operably coupled to an airbag 111 via a gas tube 113. In the illustrated embodiment, the airbag 111 is carried on a seat belt, such as a lap belt 110 mounted to a seat 115. The additional inflators 112b and 112c can be similarly coupled to additional belt-mounted airbags in adjacent seats (not shown).

In the illustrated embodiment, the EMA 102 includes a sensor 104, a power source 106 and a deployment circuit 108. As described in more detail below, a rapid deceleration or acceleration event activates the sensor 104, which initiates the deployment circuit 108. The deployment circuit 108 transmits a corresponding electrical signal to the inflators 112 which causes them to release pressurized gas (e.g., air) to rapidly inflate the respective airbags.

Although Figure 1 and the above description detail the employment of airbags in seat belts, other embodiments of the present disclosure can include airbags mounted in other locations, such as steering columns, seats, vehicle pillars or sidewalls, etc. Moreover, the sensors disclosed herein can be used to initiate other types of systems, including other types of personal restraint systems (e.g., pretensioners for seatbelt restraints, web retractor locks for seatbelt restraints, etc.).

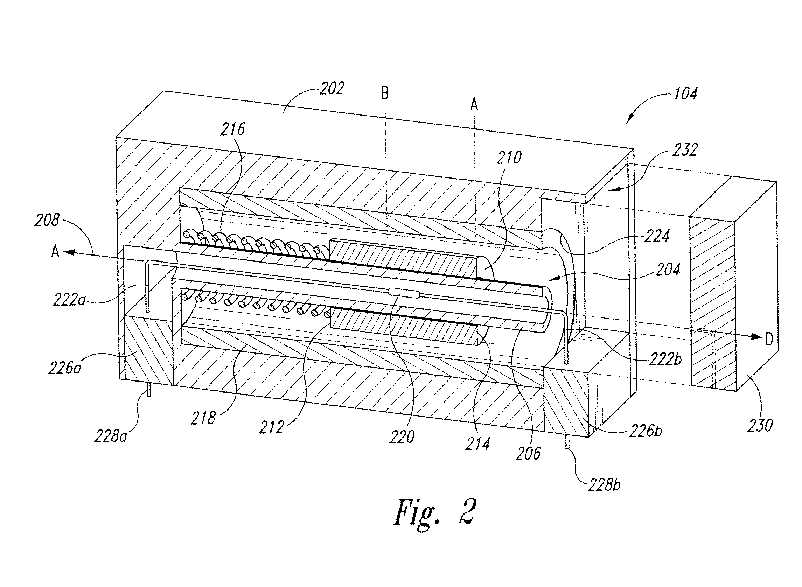

Figure 2 is a partially exploded cross-sectional isometric view of the sensor 104 configured in accordance with an embodiment of the present disclosure. In the illustrated embodiment, the sensor 104 includes a housing 202 having a cavity 204 that extends along a longitudinal axis 208. The housing 202 can include a hollow tube portion 206 that extends through the cavity 204 along the longitudinal axis 208. In the illustrated embodiment, a magnet 218 is fixedly disposed around an interior wall 224 of the cavity 204 and extends generally the length of the cavity 204. In other embodiments, the magnet 218 can extend along a portion of the cavity 204.

In the illustrated embodiment, a magnetic shield 210 is movably or slidably disposed around the hollow tube portion 206. The shield 210 has a first end portion 212 spaced apart from a second end portion 214. The shield 210 screens magnetic fields and can be made from materials exhibiting a high magnetic permeability. In one embodiment, the shield 210 can be made from a mu-metal. Suitable nickel, iron and molybdenum mu-metal alloys, for example, are available from The MuShield Company, of 9 Ricker Avenue, Londonderry, NH, USA 03053. A biasing member 216 is operably coupled between the first end portion 212 of the shield 210 and the opposing end wall of the cavity 204 to control movement of the shield 210 along the longitudinal axis 208. In the illustrated embodiment, the biasing member 216 is a coil spring that encircles the hollow tube portion 206. An end cap 230 can be inserted into an opening 232 in the housing portion 202 to enclose and seal the cavity 204 from ingress of liquids and/or debris.

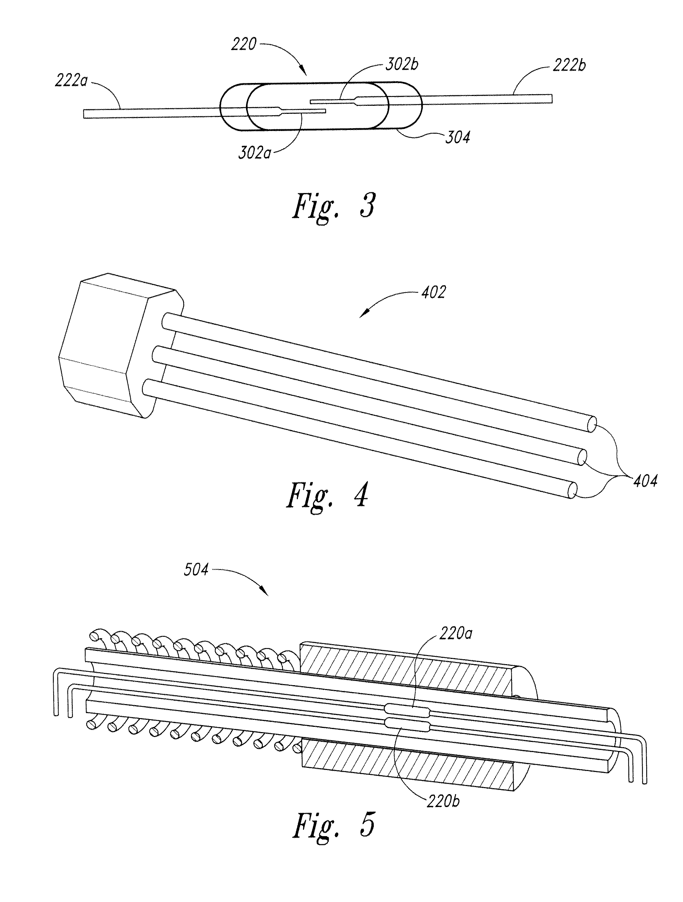

The sensor 104 includes a magnetically operable device or switch 220 operably disposed within the tube portion 206. In some embodiments, the switch 220 can be a reed switch, such as a normally open reed switch (from, e.g., HSI Sensing of 3100 Norge Road, Chickasha, Oklahoma, USA 73018), as shown in more detail in Figure 3. In other embodiments, the switch 220 can be a normally closed reed switch. Additionally, in yet other embodiments the magnetically operable device or switch can include a magnetic Hall effect sensor. As is known in the art, a Hall effect sensor varies its output voltage in response to a change in the magnetic field, and can therefore operate as a switch. For ease of reference, however, the magnetically operable device 220 will hereinafter be referred to as the reed switch 220.

The reed switch 220 is disposed within the hollow tube portion 206 and is operably coupled to a first wire 222a and a second wire 222b. The wires 222 extend from the reed switch 220 along the longitudinal axis 208 and out of the tube portion 206 on opposite ends of the housing 202. In the illustrated embodiment, the first wire 222a and the second wire 222b are operably coupled to a first terminal block 226a and a second terminal block 226b, respectively. The terminal blocks 226 can include connector pins 228, which can be used to mount the sensor 104 on a printed circuit board (PCB, not shown) or other electrical interfaces. The EMA 102 of Figure 1, for example, may include a PCB to which the sensor 104 can be mounted. In such an embodiment, the sensor 104 is operably coupled to the deployment circuit 108 through the PCB. In other embodiments, the sensor 104 may be mounted within the EMA 102 without being mounted to a PCB. In such embodiments, the wires 222 can be connected to the deployment circuit 108 via separate electrical connections (not shown). Additionally, the sensor 104 can be mounted on other components of an aircraft, automobile, or other vehicle, and similarly be connected to the deployment circuit 108 or other circuits via separate electrical connections.

In the illustrated embodiment, the cavity 204, the hollow tube portion 206, the biasing member 216, the magnet 218 and the magnetic shield 210 are generally in the shape of annular cylinders. In other embodiments, however, these components can have other cross sectional shapes, such as rectangular shapes. Additionally, the magnetic shield 210 may be positioned between the magnet 218 and the reed switch 220 without encircling the reed switch 220. Furthermore, the biasing member 216 may be positioned on the other end of the housing 202 and operably connected to the end cap 230 rather than the opposing end wall of the cavity 204.

Figure 3 is a cutaway view of the normally open reed switch 220 configured in accordance with an embodiment of the disclosure. The reed switch 220 includes a hermetically sealed vessel 304. End portions of the wires 222 extend into the vessel 304 and terminate in a pair of spaced apart metal reeds 302. As discussed further below, the metal reeds 302 can be actuated by a magnetic field of sufficient strength.

Figure 4 is an isometric view of a Hall effect sensor 402 configured in accordance with another embodiment of the disclosure. In some embodiments of the sensor 104, the Hall effect sensor 402 can be used in place of the reed switch 220. Similar to the reed switch 220, the Hall effect sensor 402 includes electrical leads 404 that can be connected to the deployment circuit 108.

Returning to Figure 2, when the sensor 104 is not subject to a deceleration/acceleration along the axis 208, the biasing member 216 retains the magnetic shield 210 with the second end portion 214 in a first position A. In position A, the shield 210 encircles the reed switch 220 and shields it from the magnetic field of the magnet 218. The second end portion 214 remains in position A until an impact or rapid deceleration/acceleration event of sufficient force along the axis 208 causes the inertia of the shield 210 to overcome the biasing member 216 and move away from the switch 220. For example, when a rapid deceleration occurs, such that a force is exerted on the sensor 104 in the direction of D, the shield 210 compresses the biasing member 216 and moves within the cavity 204 such that the second end portion 214 moves to a second position B. In position B, the shield 210 no longer encircles the reed switch 220. Accordingly, the normally open reed switch 220 is instantaneously exposed to the magnetic field of the magnet 218. The magnetic field urges the reeds 302 to come together, thereby completing an electrical connection between the wires 222 and initiating the deployment circuit 108. As a result of the initiation of the deployment circuit 108, the EMA 102 sends an initiation signal to the inflators 112 to inflate their associated airbags.

Those skilled in the art will recognize that the components of the sensor 104 may be designed to provide for an initiation that is dependent upon the change in acceleration experienced by the sensor over a period of time. By way of example, an embodiment of the sensor 104 for use in commercial aviation applications can be designed to initiate upon a crash event resulting in a change in acceleration of 16Gs over 90 milliseconds. In one embodiment, the sensor 104 can be further configured to initiate a response within 50 milliseconds. In other embodiments, however, other thresholds for the initiation and the time for response can be used.

In the illustrated embodiment, a rapid acceleration event with a force in the direction of A places a tension on the biasing member 216. However, the end cap 230 prevents the shield 210 from any significant movement in the direction of D that would expose the reed switch 220 to the magnetic field. Yet, in the embodiment discussed above with the biasing member 216 mounted on the opposite end of the housing 202, an acceleration event could result in activation of the reed switch 220. In such an embodiment, the internal cavity 204 would have space in the direction of D for the shield 210 to compress the biasing member 216 in the event of a rapid acceleration event. Additionally, yet other embodiments can include a biasing member 216 mounted in the same manner as shown in Figure 2, yet can also include space within the cavity for the shield 210 to expose the reed switch 220 to the magnetic field by moving in the direction of D. In such embodiments an acceleration event places a tension on the biasing member 216 and the shield 210 moves in the direction of D to activate the reed switch 220. Accordingly, embodiments of the sensor 104 can be configured to detect both acceleration and deceleration events. Furthermore, the sensor 104 could be mounted in an opposite direction, to provide activation during acceleration events. In addition to these embodiments, an additional sensor may be provided to allow for actuation in both deceleration and acceleration events.

Figure 5 is a cross sectional isometric view of a portion of a sensor 504 configured in accordance with another embodiment of the disclosure. In this embodiment, the sensor 504 includes multiple reed switches 220. In such an embodiment, the multiple reed switches 220 can independently connect to the deployment circuit 108. Accordingly, this configuration may be used, for example, to provide a level of redundancy.

As discussed above, the magnetic shield 210 prevents the magnetic field from the magnet 218 from activating the reed switch 220 while the magnetic shield 210 is in position A. One advantage of the embodiment described herein is that in addition to shielding the reed switch 220 from the magnetic field of the magnet 218, the magnetic shield 210 also shields the reed switch 220 from external magnetic fields, such as a stereo speaker placed near the device. External electronic or magnetic devices can generate substantial magnetic fields that could inadvertently actuate the deployment circuit. In alternative sensor designs that employ a movable magnet and no magnetic shield, these external magnetic fields can result in inadvertent initiation of the protective response. Hence, by providing for a moveable shield, rather than the moveable magnet of prior designs, the present disclosure significantly reduces the problem of inadvertent activation by an external magnetic field.

From the foregoing it will be appreciated that specific embodiments have been described herein for purposes of illustration, but that various modifications may be made without deviating from the spirit and scope of the various embodiments of the disclosure. Hence, although the illustrated embodiment includes a single sensor, it is within the scope of the present disclosure to include a plurality of sensors. In an embodiment employing multiple sensors, each sensor could be independently connected to the deployment circuit. Such a configuration may be used, for example, to provide for airbag initiation in the event of a vehicle impact from any angle, and/ or a vehicle rollover. Further, while various advantages and features associated with certain embodiments of the disclosure have been described above in the context of those embodiments, other embodiments may also exhibit such advantages and/or features, and not all embodiments need necessarily exhibit such advantages and/or features to fall within the scope of the disclosure. Accordingly, the disclosure is not limited, except as by the appended claims.

## Claims

1. A sensor, comprising:
a magnetically operable device;
a magnet providing a magnetic field; and
a shield movable between a first position in which the shield prevents the magnetic field from operating the device and a second position in which the magnetic field operates the device.

2. The sensor of claim 1, wherein the shield is operably coupled to a biasing member that positions the shield in the first position, and wherein a sufficient force exerted on the sensor drives the magnetic shield against the biasing member and moves the shield from the first position to the second position.

3. The sensor of claim 2 wherein the magnetically operable device includes a reed switch.

4. The sensor of claim 1 wherein the magnetically operable device includes a Hall effect sensor.

5. The sensor of claim 1 wherein the shield comprises a mu-metal.

6. The sensor of claim 1, further comprising a housing including a cavity, and wherein the magnet and the shield are contained within the cavity.

7. The sensor of claim 1 wherein the magnetically operable device is operably connected to an airbag deployment circuit.

8. The sensor of claim 1 wherein the magnetically operable device is a first magnetically operable device, and wherein the sensor further comprises a second magnetically operable device.

9. A sensor, comprising:
a magnetically operable switch;
a magnet fixedly disposed relative to the switch; and
a magnetic shield moveable between a first position shielding the switch from the magnet and a second position exposing the switch to the magnet.

10. The sensor of claim 9, further comprising means for controlling movement of the magnetic shield from the first position to the second position in response to at least one of a deceleration event or an acceleration event of a preset magnitude.

11. The sensor of claim 9, further comprising a housing that includes a hollow tube portion, wherein the magnet and the magnetic shield are in the shape of annular cylinders and the magnet and the magnetic shield encircle the hollow tube portion, and wherein the magnetically operable switch is positioned within the hollow tube portion.

12. The sensor of claim 9 wherein the magnetically operable switch is a normally open reed switch.

13. The sensor of claim 9 wherein the magnetic shield comprises a mu-metal.

14. The sensor of claim 9 wherein the magnetically operable switch is a first magnetically operable switch, and wherein the sensor further comprises a second magnetically operable switch.

15. The sensor of claim 9 wherein the magnetically operable switch is attached to wires, and the switch and the wires are components in an airbag actuation circuit.

16. A method of initiating an inflatable airbag, the method comprising:
moving a magnetic shield in response to a rapid deceleration or acceleration event, wherein moving the magnetic shield exposes a magnetically operable device to a magnetic field;
activating the magnetically operable device in response to the magnetic field; and
sending a signal to inflate the airbag in response to activation of the device.

17. The method of claim 15 wherein the magnetic field is generated by a magnet positioned proximate to the device.

18. The method of claim 15 wherein the airbag is a first airbag, and wherein the method further comprises sending a signal to inflate at least one additional airbag.

19. The method of claim 15 wherein the magnetically operable device is a normally open reed switch.

20. The method of claim 15 wherein the magnetic shield comprises a mu-metal.
